# EUROPÄISCHE PATENTSCHRIFT

(11) **EP 0 607 404 B1**
(45) Veröffentlichungstag und Bekanntmachung des Hinweises auf die Patenterteilung: **03.07.1996**
(21) Anmeldenummer: 93917774.7
(22) Anmeldetag: 11.08.1993
(51) Int. Cl.: B60T 8/86, B60K 41/20

(54) **VERFAHREN UND SCHALTUNGSANORDNUNG ZUR VERRINGERUNG NACHTEILIGER AUSWIRKUNGEN VON MOTORSCHLEPPMOMENTEN**
PROCESS AND CIRCUIT TO REDUCE UNDESIRED EFFECTS OF MOTOR DRAG MOMENTS
PROCEDE ET CIRCUIT POUR REDUIRE LES EFFETS INDESIRABLES DE COUPLES DE FREINAGE D'UN MOTEUR

(30) Priorität: 14.08.1992 DE 4226940
(43) Veröffentlichungstag der Anmeldung: 27.07.1994
(73) Patentinhaber: ITT Automotive Europe GmbH, D-60488 Frankfurt am Main (DE)
(72) Erfinder: FENNEL, Helmut, D-65812 Bad Soden (DE); SCHWARTZ, Jean-Claude, D-60594 Frankfurt/Main (DE); DETERMANN, Otto, D-64289 Darmstadt (DE); SCHMIDT, Robert, D56477 Rennerod (DE); EHMER, Norbert, D-63619 Bad Orb (DE)
(74) Vertreter: Blum, Klaus-Dieter, Dipl.-Ing.
(86) Internationale Anmeldenummer: EP9302126
(87) Internationale Veröffentlichungsnummer: WO9404400

(56) Entgegenhaltungen:
- DE-A- 4 009 355
- DE-A- 4 040 256
- US-A- 4 991 097

## Beschreibung

Die Erfindung bezieht sich auf ein Verfahren zur Verringerung nachteiliger Auswirkungen von Motorschleppmomenten auf das Bremsverhalten eines mit einer blockiergeschützten Bremsanlage ausgerüsteten Fahrzeuges. Eine Schaltungsanordnung zur Durchführung des Verfahrens gehört ebenfalls zur Erfindung.

Das von dem Antriebsmotor über das Getriebe auf die angetriebenen Räder übertragene Motorschleppmoment kann bei niedrigen Reibbeiwerten sehr schnell zu einem Bremsmoment führen, das im Hinblick auf die Laufstabilität der angetriebenen Räder zu hoch ist. Dies gilt besonders für leistungsstarke Antriebsmotoren und bei eingelegter niedriger Gangstufe. Durch dieses durch den Antriebsmotor hervorgerufene Bremsmoment wird in solchen Situationen, wenn es sich um ein Fahrzeug mit Vorderradantrieb handelt, die Lenkfähigkeit stark reduziert. Bei Hinterradantrieb besteht sogar Schleudergefahr. Diese Erscheinung setzt sofort nach der Reduzierung der Antriebsleistung ein und wird gegebenenfalls durch Bremsenbetätigung noch verstärkt.

Aus der Patentanmeldung DE 4040256 A1 ist bereits eine Schaltungsanordnung für eine blockiergeschützte Bremsanlage bekannt, die einen Testzyklus auslöst, wenn während eines Regelzyklus die beiden Räder einer angetriebenen Achse über eine vorgegebene Zeitspanne hinaus Instabilität signalisieren. Durch den Testzyklus wird in die Radbremse des langsameren Rades Bremsdruck eingesteuert, und es wird die Reaktion der angetriebenen Räder auf diese Druckeinsteuerung ausgewertet. Auf diese Weise stellt die Regelung fest, ob es sich um Auswirkungen eines Motorschleppmomentes handelt. Ist dies der Fall, wird durch die Druckeinsteuerung in die Radbremse des langsameren Rades über das Differential die Geschwindigkeit des zweiten Rades dieser Achse erhöht und dadurch die Laufstabilität und Seitenführung erheblich verbessert.

Bekannt ist es auch, durch Eingriff in den Antriebsstrang, nämlich durch Auskuppeln, die Übertragung des Motorschleppmomentes auf die Räder zu verhindern. Dies ist aufwendig, insbesondere deswegen, weil sich der richtige Zeitpunkt zum erneuten Einkuppeln schwer bestimmen läßt.

Ein anderer denkbarer Weg zur Lösung des Problems besteht darin, durch Anhebung der Motordrehzahl mit Hilfe einer Schleppmomentregelung das auf die angetriebenen Räder übertragene Bremsmoment zu verringern.

Der Erfindung liegt daher die Aufgabe zugrunde, ein Verfahren der eingangs genannten Art zu entwickeln, das auf einfache Weise, ohne jeglichen Eingriff in den Antrieb des Fahrzeuges, die nachteiligen Auswirkungen von Motorschleppmomenten auf das Bremsverhalten eines Fahrzeuges entscheidend reduziert. Es hat sich herausgestellt, daß dies durch das im beigefügten Anspruch 1 beschriebene Verfahren und der in Anspruch 3 genannten Schaltungsanordnung gelingt.

Erfindungsgemäß wird folglich zu einem sehr frühen Zeitpunkt, im allgemeinem schon vor einer Bremsbetätigung, erkannt, daß eine Situation mit nachteilig sich auswirkenden Motorschleppmomenten vorliegt. Eine solche Situation kann eintreten, sobald der Fahrer seinen Fuß vom Gaspedal nimmt, und zwar unabhängig von einer sich eventuell daran anschließenden Bremsenbetätigung. Die Einsteuerung von Bremsdruck in die Radbremsen der angetriebenen Räder wird dann als Folge dieser Motorschleppmoment-Erkennung verhindert. Die Wiederannäherung der Fahrzeuggeschwindigkeit an die Geschwindigkeit der angetriebenen Räder wird nicht behindert, da keine zusätzliche Bremsdruckeinsteuerung erfolgt. Die angetriebenen Räder werden also sehr schnell wieder in die Lage versetzt, hohe Seitenführungskräfte zu übernehmen. Bei Vorderradantrieb wird die Lenkfähigkeit erhalten oder sehr schnell wieder hergestellt.

Erfindungsgemäß wird ein annähernd gleicher, über einen vorgegebenen Grenzwert oder innerhalb eines vorgegebenen Bandes liegender Bremsschlupf an den angetriebenen Rädern als Indiz für die Auswirkung von Motorschleppmomenten gewertet. Bremsdruckeinsteuerung wird dann solange verhindert oder schon vorhandener Bremsdruck solange reduziert, bis die Fahrzeuggeschwindigkeit wieder mit der Geschwindigkeit der angetriebenen Räder annähernd überein stimmt.

Weitere Merkmale, Vorteile und Anwendungsmöglichkeiten der Erfindung gehen aus der folgenden Darstellung weiterer Details anhand der beigefügten Abbildungen hervor.

Es zeigen
- Fig. 1: im Diagramm den Verlauf der Radgeschindigkeit und der Fahrzeug-Referenzgeschwindigkeit in einer für die Erfindung typischen Phase und
- Fig. 2: in vereinfachter, schematischer Darstellung die wichtigsten Komponenten einer Schaltungsanordnung nach der Erfindung.

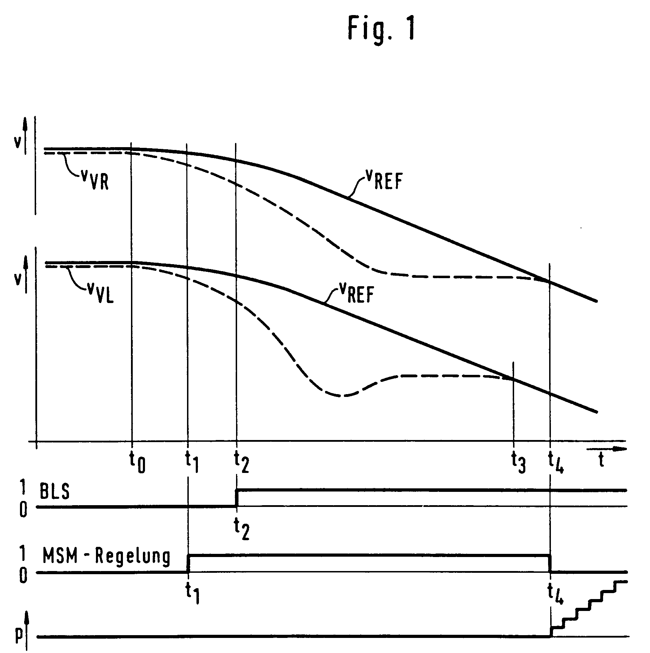

Die Diagramme nach Fig. 1 Diagramme gelten für ein Fahrzeug mit Vorderradantrieb, und sie beziehen sich auf eine Situation, in der das erfindungsgemäße Verfahren zur Wirkung gelangt. Dargestellt ist der Geschwindigkeitsverlauf v_{VR}, v_{VL} des rechten Vorderrades (VR) und linken Vorderrades (VL) eines Fahrzeuges und die Fahrzeuggeschwindigkeit oder Fahrzeug-Referenzgeschwindigkeit v_{REF} während der gleichen Zeitspanne. Es handelt sich um eine Fahrsituation auf geringem Reibwert, z.B. auf Glatteis oder Schnee.

Die Geschwindigkeit des Fahrzeuges ist zunächst annähernd konstant, weshalb Radgeschwindigkeit v_{VR}, v_{VL} und Fahrzeug-Referenzgeschwindigkeit v_{REF} übereinstimmen. Zum Zeitpunkt tₒ nimmt der Fahrer den Fuß vom Gaspedal, so daß nun das Fahrzeug durch das Motorschleppmoment, das auf die angetriebenen Vorderräder übertragenen wird und sich dort als Bremsmoment auswirkt, abgebremst wird. Die Bremswirkung an den Vorderrädern ist in dieser Situation so hoch, daß sich an beiden Vorderrädern ein gleichmäßiger, hoher Bremsschlupf einstellt. Die Differenz zwischen der Radgeschwindigkeit v_{VR} bzw. v_{VL} und der Referenzgeschwindigkeit v_{REF} entspricht dem Schlupf.

Zum Zeitpunkt t₁ überschreitet der Bremsschlupf an den beiden Vorderrädern eine vorgegebene Ansprechschwelle, worauf die erfindungsgemäße Motorschleppmoment-Regelung (MSM- Regelung) einsetzt. Die Regelung verhindert jegliche Druckeinsteuerung in die Radbremsen der angetriebenen Räder; sollte, was hier nicht der Fall ist, bereits Bremsdruck in diesen Radbremsen vorhanden sein, wird dieser Druck konstantgehalten oder gar abgebaut.

Das Bremsgeschehen an den nicht angetriebenen Hinterrädern wird durch die MSM-Regelung nicht beeinflußt.

Zum Zeitpunkt t₂ wird die Fahrzeugbremse betätigt; dargestellt ist dies durch das Erscheinen des BLS-Signals (BLS=Bremslichtschalter). Zusätzlich zu dem bremsend wirkenden Motorschleppmoment, das auf die angetriebenen Räder wirkt, wird nun auch Bremskraft auf die nicht angetriebenen Räder ausgeübt, so daß die Fahrzeugverzögerung zunimmt; die Fahrzeuggeschwindigkeit nimmt ab. Die nun zu beobachtenden Differenzen im Geschwindigkeitsverlauf der beiden Vorderräder bzw. im Bremsschlupf an den Vorderrädern gehen auf ungleiche Reibbeiwerte, ungleiche Radbelastungen usw. zurück. Auch ist zu beachten, daß über das Ausgleichgetriebe beide Vorderräder miteinander gekoppelt sind.

Im weiteren Verlauf des Geschehens findet eine Annäherung der Fahrzeuggeschwindigkeit und damit der Fahrzeug-Referenzgeschwindigkeit an den Lauf der beiden Vorderräder statt. Zum Zeitpunkt t₃ wird der Bremsschlupf an dem linken Vorderrad VL, zum Zeitpunkt t₄ an dem rechten Vorderrad VR annähernd zu null. Dadurch wird die MSM-Regelung beendet, mit der Folge, daß nun auch in die angetriebenen Vorderräder Bremsdruck p eingesteuert wird. Der treppenförmige Verlauf der Druckkennlinie p zeigt an, daß im vorliegenden Ausführungsbeispiel der Bremsdruck durch eine Impulsfolge gesteuert wird.

Aus den Diagrammen ist zu erkennen, daß durch die frühzeitige Reaktion der Bremsanlage auf die durch das Motorschleppmoment bedingte Instabilität bzw. auf den zu hohen Bremsschlupf und durch das frühzeitige Einsetzen der MSM-Regelung (bereits vor der Bremsbetätigung) die Laufstabilität der Vorderräder und damit die Lenkbarkeit des Fahrzeuges erhalten bleibt oder sehr schnell wieder hergestellt wird. Bei Fahrzeugen mit Hinterradantrieb wirkt sich die MSM-Regelung nach der Erfindung günstig auf die Fahrstabilität des Fahrzeuges aus.

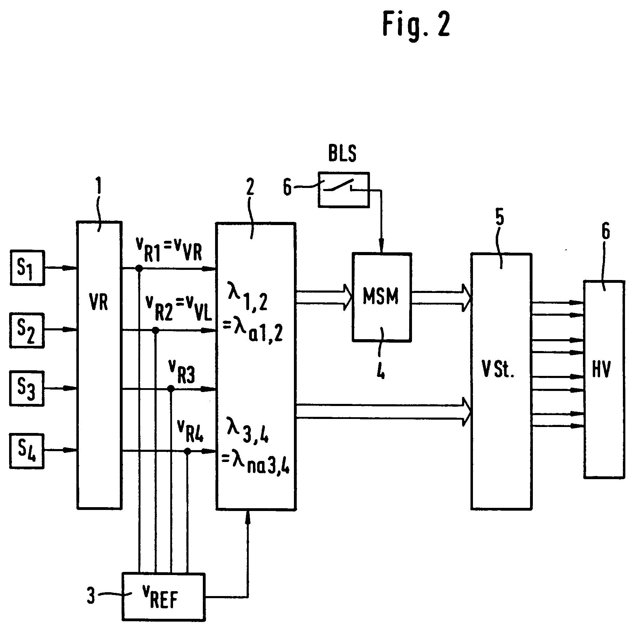

Fig. 2 veranschaulicht das Prinzip einer Schaltungsanordnung zur Durchführung des erfindungsgemäßen Verfahrens.

Die Fahrzeugräder sind individuell mit Radsensoren S₁ bis S₄ versehen. Nach Aufbereitung der Sensorsignale in einer Aufbereitungsschaltung 1 werden die das Drehverhalten der einzelnen Räder wiedergebenden Signale v_{R1} bis v_{R4} in einer Schaltung 2 weiterverarbeitet. Außerdem wird durch logische Verknüpfung der Geschwindigkeitssignale v_{R1} bis v_{R4} in einem Schaltkreis 3 eine Fahrzeug-Referenzgeschwindigkeit v_{REF} gebildet.

In der Schaltung 2 wird aus den Radgeschwindigkeiten v_{R1} bis v_{R4} und der Fahrzeug-Referenzgeschwindigkeit v_{REF} u.a. der jeweilige Radschlupf λ_{1...4} abgeleitet, wobei in Fig. 2 in der Schaltung 2 zwischen dem Schlupf der angetriebenen Räder (Index: "a") und Schlupf der nichtangetriebenen Räder (Index: "na") unterschieden wird. Im vorliegenden Beispiel werden in Übereinstimmung mit Fig. 1 die beiden Vorderräder angetrieben, so daß v_{R1} mit v_{VR} und v_{R2} mit v_{VL} gleichzusetzen sind.

Die Schlupfwerte λ_{a1,2} der angetriebenen Räder, hier der Vorderräder, werden über einen Schaltblock 4, in den die Motorschleppmoment-Regelung (MSM) stattfindet, zu einem Schaltblock 5, der die Ventilsteuerung VSt enthält, weitergeleitet. Die aus dem Drehverhalten der nichtangetriebenen Hinterräder (v_{R3},v_{R4}) abgeleiteten Schlupfwerte werden der Ventilsteuerung 5 direkt zugeführt.

Die Motorschleppmomentregelung 4 erhält außerdem, wie der Schaltblock 6 mit dem Bremslichtschalter BLS symbolisiert, Informationen über den Zeitpunkt der Bremsenbetätigung.

Mit den Ausgangssignalen der Ventilsteuerung 5 werden schließlich die in einem Block 7 zusammengefaßten elektrisch betätigbaren Hydraulikventile HV gesteuert.

Aus Fig. 2 ist also zu entnehmen, daß die Erfindung durch eine einfache Zusatzschaltung, nämlich der Motorschleppmomentregelung 4, verwirklicht werden kann.

## Patentansprüche

1. Verfahren zur Verringerung nachteiliger Auswirkungen von Motorschleppmomenten auf das Bremsverhalten eines mit einer blockiergeschützten Bremsanlage ausgerüsteten Fahrzeuges, dadurch **gekennzeichnet**, daß unabhängig von einer Bremsbetätigung der Bremsschlupf (λ_{1,2}) der angetriebenen Räder ermittelt wird und daß bei einem annähernd gleichen, über einem vorgegebenen Grenzwert oder innerhalb eines vorgegebenen Bereichs liegenden Bremsschlupf (λ_{1,2}) ein Druckaufbau in den Radbremsen der angetriebenen Räder (VR,VL) unterbunden oder vorhandener Bremsdruck reduziert wird.

2. Verfahren nach Anspruch 1, dadurch **gekennzeichnet**, daß der Bremsdruckaufbau solange verhindert oder die Bremsdruckreduzierung solange fortgesetzt wird, bis sich die Fahrzeuggeschwindigkeit oder Fahrzeug-Referenzgeschwindigkeit (v_{REF}) der Geschwindigkeit der angetriebenen Räder (VL,VR) wieder angenähert hat.

3. Schaltungsanordnung zur Durchführung des Verfahrens nach Anspruch 1 oder 2, für eine blockiergeschützte Bremsanlage mit Radsensoren, mit Schaltungen zur Auswertung der Senorsignale, zur Ermittlung des Radschlupfes, der Fahrzeug-Referenzgeschwindigkeit und anderer Regelgrößen sowie zur Erzeugung von Bremsdruck-Steuersignalen, dadurch **gekennzeichnet,** daß Schaltkreise (2,4) vorhanden sind, die unabhängig von einer Bremsbetätigung den Bremsschlupf (λ_{1,2}) der angetriebenen Räder (VR,VL) ermitteln und die bei einem annähernd gleichen, über einem vorgegebenen Grenzwert oder innerhalb eines vorgegebenen Bereichs liegenden Bremsschlupf (λ_{1,2}) an den angetriebenen Rädern solange eine Einsteuerung von Bremsdruck in die Radbremsen der angetriebenen Räder (VR,VL) verhindern, bis die Fahrzeug-Referenzgeschwindigkeit (v_{REF}) die Geschwindigkeit (v_{VL},v_{VR}) der angetriebenen Räder (VL,VR) zumindest näherungsweise wieder erreicht hat.

4. Schaltungsanordnung nach Anspruch 3, dadurch **gekennzeichnet,** daß die Schaltkreise (2,4) bei einem annähernd gleichen, über einem vorgegebenen Grenzwert oder innerhalb eines vorgegebenen Bereichs liegenden Bremsschlupf (λ_{1,2}) an den angetriebenen Rädern (VL,VR) solange vorhandenen Bremsdruck konstanthalten oder reduzieren, bis die Fahrzeug-Referenzgeschwindigkeit (v_{REF}) die Geschwindigkeit (v_{VL},v_{VR}) der angetriebenen Räder (VL,VR) zumindest näherungsweise wieder erreicht hat.

## Claims

1. A process for the reduction of disadvantageous effects of engine stall torques on the braking behaviour of a vehicle which is equipped with a brake unit having an anti-lock control system,
**characterized** in that, independently of an actuation of the brake, the brake slip (λ_{1,2}) of the driven wheels is determined, and in that at a nearly equal brake slip (λ_{1,2}) exceeding a preset limit value or falling within a pre-established range a pressure build-up in the wheel brakes of the driven wheels (VR, VL) is prevented or brake pressure already existing is reduced.

2. A process as claimed in claim 1,
**characterized** in that the brake pressure build-up is prevented or the brake pressure reduction is continued until the vehicle speed or vehicle reference speed (v_{REF}) has approached again the speed of the driven wheels (VL, VR).

3. A circuit arrangement for carrying out the process as claimed in claim 1 or claim 2, for a brake unit having an anti-lock control system including wheel sensors, circuits for evaluating the sensor signals, for determining the wheel slip, the vehicle reference speed and other control variables and for generating brake pressure control signals,
**characterized** in that circuits (2, 4) are provided which determine the brake slip (λ_{1,2}) of the driven wheels (VR, VL) independently of a brake actuation and, at a nearly equal brake slip (λ_{1,2}) at the driven wheels exceeding a preset limit value or falling within a preestablished range, prevent the controlled supply of brake pressure into the wheel brakes of the driven wheels (VR, VL) until the vehicle reference speed (v_{REF}) has reached again the speed (v_{VL}, v_{VR}) of the driven wheels (VL, VR) at least in approximation.

4. A circuit arrangement as claimed in claim 3,
**characterized** in that, at a nearly equal brake slip (λ_{1,2}) at the driven wheels (VL, VR) exceeding a preset limit value or falling within a pre-established range, the circuits (2, 4) maintain constant or reduce existing brake pressure until the vehicle reference speed (v_{REF}) has reached again the speed (v_{VL}, v_{VR}) of the driven wheels (VL, VR) at least in approximation.

## Revendications

1. Procédé permettant de réduire les effets nuisibles de couples de frein moteur sur le comportement de freinage d'un véhicule équipé d'un système de freinage antiblocage, caractérisé en ce qu'indépendamment d'un actionnement du frein, le glissement de freinage (λ_{1,2}) des roues motrices est déterminé et en ce que, pour un glissement de freinage (λ_{1,2}) qui est approximativement identique, supérieur à une valeur limite préfixée ou compris dans un intervalle de valeurs préfixé, l'établissement d'une pression dans les freins de roue des roues motrices (VR, VL) cesse ou une pression de frein existante est réduite.

2. Procédé selon la revendication 1, caractérisé en ce que l'établissement d'une pression de frein est empêchée, ou la réduction de la pression de frein est poursuivie, aussi longtemps que la vitesse de véhicule ou vitesse de référence de véhicule (v_{REF}) ne s'est pas de nouveau approchée de la vitesse des roues motrices (VR, VL).

3. Agencement de circuit permettant la mise en oeuvre du procédé de la revendication 1 ou 2, pour système de freinage antiblocage comportant des capteurs de roue et des circuits destinés à l'exploitation des signaux de capteur, a la détermination du glissement de roue, de la vitesse de référence de véhicule et d'autres grandeurs de régulation, et à la production de signaux de commande de pression de frein, caractérisé en ce qu'il est prévu des circuits (2, 4) qui, indépendamment d'un actionnement du frein, déterminent le glissement de freinage (λ_{1,2}) des roues motrices et, pour un glissement de freinage (λ_{1,2}) sur les roues motrices qui est approximativement identique, supérieur à une valeur limite préfixée ou compris dans un intervalle de valeurs préfixé, empêchent une augmentation de la pression de frein dans les freins de roue des roues motrices (VR, VL) aussi longtemps que la vitesse de référence de véhicule (v_{REF}) n'a pas de nouveau atteint au moins d'une manière approximative la vitesse (v_{VL}, v_{VR}) des roues motrices (VL, VR).

4. Agencement de circuit selon la revendication 3, caractérisé en ce que, pour un glissement de freinage (l_{1,2}) sur les roues motrices (VL, VR) qui est approximativement identique, supérieur à une valeur limite préfixée ou compris dans un intervalle de valeurs préfixé, les circuits (2, 4) maintiennent constante ou réduisent la pression de frein existante, aussi longtemps que la vitesse de référence de véhicule (v_{REF}) n'a pas de nouveau atteint au moins d'une manière approximative la vitesse (v_{VL}, v_{VR}) des roues motrices (VL, VR).
